(19)

**Europäisches Patentamt**
**European Patent Office**
**Office européen des brevets**

(11) **EP 4 647 714 A1**

(12) **EUROPEAN PATENT APPLICATION**
published in accordance with Art. 153(4) EPC

(43) Date of publication:
**12.11.2025 Bulletin 2025/46**

(51) International Patent Classification (IPC):
**G01B 7/00** $^{(2006.01)}$     **G01D 5/20** $^{(2006.01)}$

(21) Application number: **23914660.8**

(52) Cooperative Patent Classification (CPC):
**F15B 11/08; G01B 7/00; G01D 5/20**

(22) Date of filing: **04.01.2023**

(86) International application number:
**PCT/JP2023/000003**

(87) International publication number:
**WO 2024/147168 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Astemo, Ltd.**
**Chiyoda-ku,**
**Tokyo 1000004 (JP)**

(72) Inventors:
• **FUJIKAWA, Yosuke**
  **Hitachinaka-shi, Ibaraki 312-8503 (JP)**
• **MURAKAMI, Yosuke**
  **Hitachinaka-shi, Ibaraki 312-8503 (JP)**

(74) Representative: **Nordmeyer, Philipp Werner**
**Maucher Jenkins**
**Patent- und Rechtsanwälte**
**Liebigstraße 39**
**80538 München (DE)**

(54) **POSITION SENSOR AND FLUID PRESSURE SYSTEM**

(57)     A position sensor (SE) has a movable member (63) provided in a housing (61) and allowed to reciprocate by receiving a pressure from a fluid in the housing (61) or pressing the fluid, a coil spring (68) configured to bias the movable member (63), and a control board (64) configured to feed a current through the coil spring (68) to generate a magnetic field. An electrical signal (F-Iout) fluctuating according to a movement of the movable member (63) is output from the coil spring (68).

FIG. 1

EP 4 647 714 A1

## Description

TECHNICAL FIELD

The present invention relates to a position sensor, a fluid pressure system, and the like.

BACKGROUND ART

For example, FIG. 7 and paragraph "0026" of the specification in Patent Literature 1 show a sensor in which a load is applied to an air core coil spring by an upper load portion to compress the air core coil spring, a variable inductance corresponding to the displacement is generated, and a changing inductance is detected to detect the displacement.

For example, FIGS. 2 to 8 in Patent Literature 2 show a configuration in which a mechanical displacement sensor is provided in the vicinity of a jack for vehicle height adjustment in a vehicle height adjustment device for a motorcycle. Paragraph "0083" of the specification discloses that a stroke sensor may be used as the displacement sensor.

In the vehicle height adjustment device in Patent Literature 2, a self-pump that uses vibration due to unevenness of a road surface is used as a drive source for oil, and a solenoid valve that switches a path through which the oil flows is used.

CITATION LIST

PATENT LITERATURE

Patent Literature 1: JP3499844B
Patent Literature 2: JP6873355B

SUMMARY OF INVENTION

TECHNICAL PROBLEM

Studies by the present inventors have revealed the following problem.

That is, Patent Literature 1 does not consider at all that a sensor using a coil spring is provided in a housing in which a fluid such as oil is stored.

For example, in the case of Patent Literature 1, the upper load portion that compresses the coil spring simply compresses the coil spring using some kind of pressing force. In other words, it is not considered at all that the upper load portion is pressed by the fluid or the fluid is pressed to reciprocate in the housing.

Therefore, it is unclear how to apply the sensor in Patent Literature 1 to a fluid pressure system such as a hydraulic system.

In the vehicle height adjustment device in Patent Literature 2, since the mechanical sensor for detecting the displacement at the time of vehicle height adjustment is provided in the vicinity of the jack, it is undeniable that the configuration is slightly complicated.

In Patent Literature 2, a self-pump using mechanical vibration is used as a drive source for oil, and this is undeniably a disadvantage for electrification.

In Patent Literature 2, a solenoid valve is used. In the solenoid valve, a coil serving as an electronic component, in other words, a solenoid is used, but in order to increase the speed of control and improve the accuracy, an expensive coil needs to be used. Electronic control for driving the coil is also required, and it is undeniable that the control system is complicated.

When the mechanical displacement sensor described above is replaced with an electrical stroke sensor, a coil serving as an electronic component is also used for the stroke sensor, and thus an increase in cost is also expected in this respect.

An object of the present invention is to provide a position sensor that enables to be easily incorporated into a fluid pressure system and that is capable of reducing in cost.

An object of the present invention is to provide the fluid pressure system that enables to be simplified in configuration and that capable of reducing in cost.

SOLUTION TO PROBLEM

As a result of intensive studies, the present inventors have found that a position sensor can be simplified in configuration and can be reduced in cost using a coil spring that biases a movable member in a housing in which a fluid is stored as a component of the position sensor.

It has been found that the position sensor can also be provided in, for example, a reservoir of a fluid pressure system, thereby improving the degree of freedom in design of the fluid pressure system and contributing to simplification of the configuration of the system.

The present invention was completed based on these findings.

Hereinafter, the present disclosure will be described.

An aspect of the present disclosure provides a position sensor (SE) having: a movable member (63) provided in a housing (61) and allowed to reciprocate by receiving a pressure from a fluid in the housing (61) or pressing the fluid; a coil spring (68) configured to bias the movable member (63); and a control board (64) configured to feed a current through the coil spring (68) to generate a magnetic field, in which an electrical signal (F-Iout) fluctuating according to a movement of the movable member (63) is output from the coil spring (68).

Another aspect of the present disclosure provides a fluid pressure system (500) having: a jack (206) including a jack chamber 207 into and from which a fluid flows; a reservoir (60) connected to the jack chamber (206) via a fluid pressure circuit through which the fluid flows, and including a storage chamber (62) which stores a fluid; a pump (34) provided in the fluid pressure circuit, capable of forward rotation and reverse rotation, and allowing a discharge direction of the fluid to change by switching between the forward rotation and the reverse rotation; and a control unit (300) configured to switch between the forward rotation and the reverse rotation of the pump (34), in which the reservoir (60) includes the position sensor of the aspect described above, the movable member (63) in the position sensor is a piston that moves in a first direction by being pressed by the fluid when an amount of the fluid increases due to the fluid flowing into the storage chamber (62), and that presses the fluid by being biased by the coil spring (68) and moves in a second direction opposite to the first direction when the amount of the fluid decreases due to the fluid flowing out of the storage chamber (62), and the control unit (300) switches between the forward rotation and the reverse rotation of the pump (34) based on an electrical signal (F-Iout) output by the position sensor (SE).

ADVANTAGEOUS EFFECTS OF INVENTION

According to the present invention, it is possible to provide the position sensor that enables to be easily incorporated into the fluid pressure system and that is capable of reducing in cost.

According to the present invention, it is possible to provide the fluid pressure system that enables to simplify the configuration and that is capable of reducing in cost.

BRIEF DESCRIPTION OF DRAWINGS

[FIG. 1] FIG. 1 is a diagram showing a configuration of a position sensor and a fluid pressure system serving as a vehicle height adjustment device using the position sensor, and an example of an electrical signal output from the position sensor.
[FIG. 2] FIG. 2 is a diagram showing an example of a rotation direction of a pump and a flow of a fluid when the vehicle height is increased in the fluid pressure system shown in FIG. 1.
[FIG. 3] FIG. 3 is a diagram showing an example of the rotation direction of the pump and the flow of the fluid when the vehicle height is reduced in the fluid pressure system shown in FIG. 1.
[FIG. 4] FIG. 4 is a diagram showing an example of the relationship between the vehicle speed and the vehicle height.
[FIG. 5] FIG. 5 is a diagram showing an example of an equivalent circuit diagram of the position sensor, an example of the structure of a coil spring that is a component of the position sensor, and an example of arrangement of a control board.
[FIG. 6] FIG. 6 is a diagram showing the position sensor in a state in which the coil spring is extended and the position sensor in a state in which the coil spring is compressed to the close contact length.
[FIG. 7] FIG. 7 is a flowchart showing a procedure example of vehicle height adjustment control.

DESCRIPTION OF EMBODIMENTS

Embodiments of the present invention will be described below with reference to the accompanying drawings. The embodiments shown in the accompanying drawings are examples of the present invention, and the present invention is not limited to the embodiments.

<Example 1>

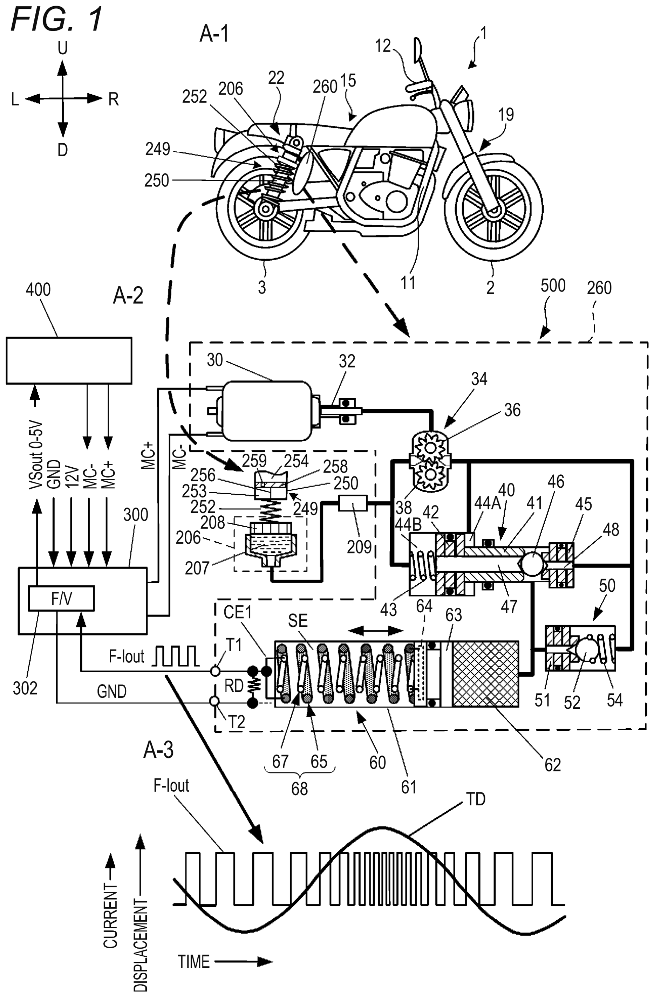

Reference is made to FIG. 1. FIG. 1 is a diagram showing a configuration of a position sensor and a fluid pressure system serving as a vehicle height adjustment device using the position sensor, and an example of an electrical signal output from the position sensor.

In FIG. 1, U indicates an upward direction, D indicates a downward direction, L indicates a leftward direction, and R indicates a rightward direction. This point also applies to the subsequent drawings.

In the following description, the fluid may be referred to as a hydraulic fluid. In the present example, oil, in other words, hydraulic oil is used as the fluid. The fluid pressure circuit used in the present invention is a hydraulic circuit.

In A-1 of FIG. 1, a motorcycle 1 has a front wheel 2 that is a wheel on the front side, a rear wheel 3 that is a wheel on the rear side, and a vehicle main body 15 including a vehicle body frame 11, an accelerator grip 12 as an operation portion, and the like that constitute the framework of the motorcycle 1.

The motorcycle 1 has one front fork 19 as a front suspension portion that connects the front wheel 2 and the vehicle main body 15 to each other, on each of the left side and the right side of the front wheel 2.

The motorcycle 1 has one rear suspension 22 as a rear suspension portion that connects the rear wheel 3 and the vehicle main body 15 to each other, on each of the left side and the right side of the rear wheel 3.

The rear suspension 22 has a jack 206, a shock absorber 249 including a damper tube 250, a suspension spring 252, and a reservoir tank 260.

As shown in A-2 of FIG. 1, the rear suspension 22 is provided with a fluid pressure system 500 in which the hydraulic fluid is moved by being driven by a pump or the like.

The hydraulic fluid may be gas or liquid, and the type thereof is not limited. As described above, in the present example, oil is used. In other words, the rear suspension 22 is a hydraulic suspension.

A-2 of FIG. 1 will be referred to. In A-2 of FIG. 1, a black thick line indicates a flow path through which hydraulic oil serving as a hydraulic fluid flows.

In A-2 of FIG. 1, the shock absorber 249 has a damper tube 250 as a container of the shock absorber 249. The inside of the damper tube 250 is divided into two oil chambers 253 and 254 by a piston 258 serving as a component of the shock absorber 249. The piston 258 is provided with an orifice 259. A rod 256 is attached to the piston 258.

The jack 206 for vehicle height adjustment has a jack chamber 207 into or from which the hydraulic fluid flows and a plunger 208. The jack 206 is connected to a hydraulic circuit serving as a fluid pressure circuit in the reservoir tank 260 via a hydraulic coupler 259.

The suspension spring 252 presses the plunger 208 of the jack 206 and biases the damper tube 250 so as to push up the damper tube 250. Although the details of the mechanical structure are omitted, the piston 258 and the damper tube 250 of the shock absorber 249 are biased in opposite directions by the suspension spring 252.

In the reservoir tank 260, there is provided a motor unit 30, a motor shaft seal 32, a gear pump 34 that includes two gears 36 and 38, that is driven by the motor unit 30, and that is capable of changing the discharge direction of the hydraulic oil, a hydraulic valve 40 as a direction switching valve, a check valve 50, a reservoir 60 having a storage chamber 62 that stores the hydraulic oil as a hydraulic fluid, and terminals T1 and T2 that function as output terminals of the position sensor provided in the reservoir 60.

The gear pump 34 may be simply referred to as a pump. The type of the motor unit 30 is not particularly limited, and a DC motor is used in the example in FIG. 1. In the following description, the DC motor 30 may be described.

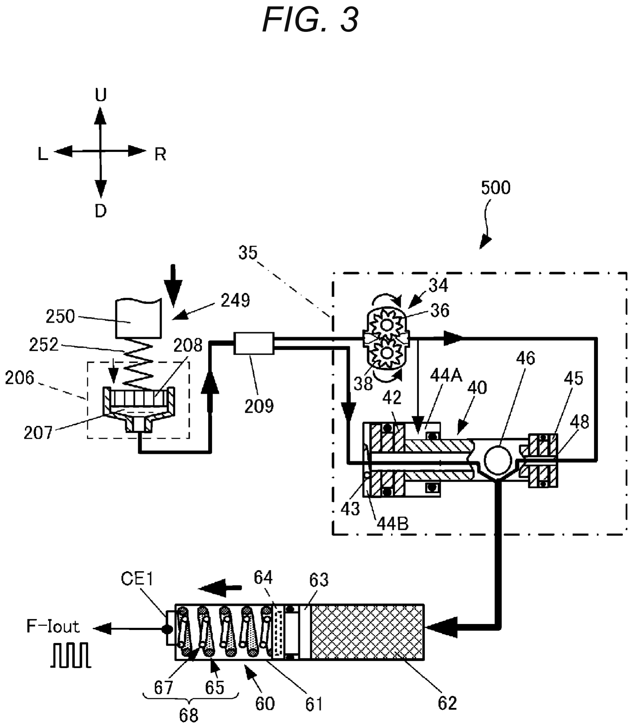

The hydraulic valve 40 serving as a fluid pressure valve functions as a direction switching valve, and has a plunger 41, a piston 42 integrated with the plunger 41, a spring 43 that biases the piston 42, a first liquid chamber 44A, a second liquid chamber 44B, a valve seat 45, a valve body 46, and flow paths 47 and 48. When a part of the hydraulic oil moving via the gear pump 34 flows into the first liquid chamber 44A, the piston 42 moves to the left, and the valve body 46 opens. This point will be described with reference to FIG. 3.

The check valve 50 has a valve seat 51, a valve body 52, and a spring 54 that biases the valve body 52.

The reservoir 60 has a housing 61, a storage chamber 62 that stores hydraulic oil as a hydraulic fluid, a piston 63 as a movable member, a control board 64 attached to, for example, the inside or the surface of the piston 63, and a coil spring 68 as a biasing member that biases the piston 63. The attachment position of the control board 64 is not particularly limited, and the control board 64 is preferably attached in the housing 61.

In the example in FIG. 1, the coil spring 68 has a double-spring structure. In other words, the coil spring 68 includes a first coil spring 65 that has a large diameter and that is provided on the outer side, and a second coil spring 67 that has a small diameter and that is provided on the inner side. The coil springs 65 to 68 may be referred to as a biasing member or simply a spring.

The end portions of the first coil spring 65 and the second coil spring 67 on the side opposite to the piston 63 are electrically connected to each other by a conductor CE1 for electrical connection formed of an electrode or the like. Therefore, the coil spring 68 having a double structure constitutes one electrical signal path as a whole.

Further, the end portions of the first and second coil springs 65 and 67 located near the piston 63 are electrically connected to the control board 64. A position sensor SE is configured by electrically connecting the members in this manner.

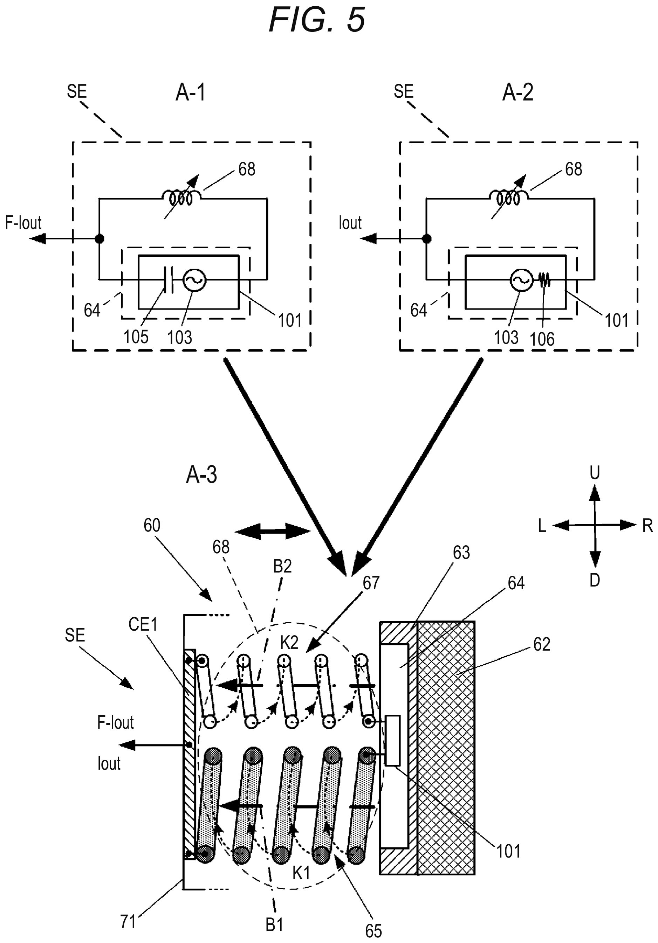

The details of the position sensor SE will be described with reference to FIG. 5. The position sensor may be simply referred to as a sensor. The position sensor can be configured as a stroke sensor.

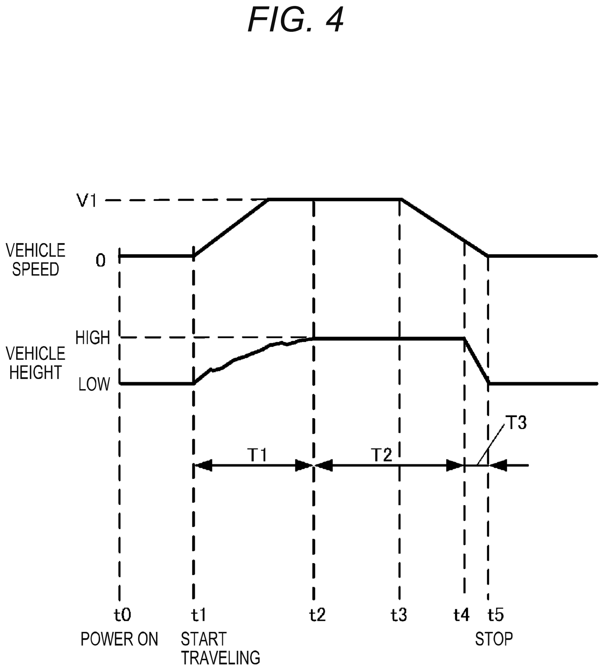

The piston 63 has an insertion portion that is inserted into the coil spring 68 having a double structure, and the insertion portion is omitted in A-2 of FIG. 1. The details of the coil spring 68 will be described with reference to FIG. 4.

In the example in FIG. 1, the coil spring 68 also serves as a component of an LC resonance circuit (an oscillation circuit) constituting the position sensor SE.

A current signal F-Iout whose frequency fluctuates according to the displacement amount of the piston 63 or the coil spring 68 is output from the terminal T1.

An example of the waveform of the current signal F-Iout whose frequency fluctuates is shown in A-3 of FIG. 1. The frequency of the current signal F-Iout fluctuates on the time axis according to a displacement amount TD of the piston 63 or the coil spring 68. Therefore, it is possible to detect the displacement amount TD by detecting the change in the frequency.

However, this is an example, and the present invention is not limited to this example. In other words, the position sensor SE may not constitute a resonance circuit (an oscillation circuit). In this case, as shown in A-2 of FIG. 4, a current signal Iout whose current amount fluctuates according to the displacement amount of the piston 63 or the coil spring 68 is generated from the terminal T1.

The current signal Iout can be rephrased as a detection signal of the position sensor SE, a sensor signal, or the like. A circuit configuration example of the position sensor SE will be described with reference to FIG. 4.

The terminal T2 is a reference potential terminal, specifically, a ground terminal. A current bias resistor RD is provided between the terminals T1 and T2.

The detection signal serving as the electrical signal output by the position sensor SE, in other words, the sensor signal F-Iout is supplied to a control unit 300.

The control unit 300 executes switching control for changing the rotation direction of the motor unit 30 based on the received detection signal of the position sensor SE, in other words, the sensor signal F-Iout.

The control unit 300 has an F/V converter 302 that converts a frequency-modulated signal into a voltage signal. However, as shown in A-2 of FIG. 4, when the current signal Iout is obtained, the F/V converter 302 is replaced with an I/V converter that converts the current signal into a voltage signal. A power supply voltage of 12 V and a ground potential GND are applied to the control unit 300.

The detection signal F-Iout of the position sensor is converted into a voltage signal VSout by F/V conversion. dynamic range of VSout is 0 V to 5 V. The voltage signal VSout is supplied to a motor drive signal generation circuit MC-GE that generates a drive signal for the DC motor 30.

A motor drive signal generation circuit 400 generates two drive signals, that is, a positive drive signal MC+ and a negative drive signal MC-. The drive signals MC+ and MC-are supplied to the control unit 300.

The control unit 300 drives the DC motor 30 by the pass-through method. The drive signals MC+ and MC- are supplied to the DC motor 30 through the control unit 300. However, the control unit 300 can switch the drive signals MC+ and MC-. By this switching, the DC motor 30 can be switched between the forward rotation and the reverse rotation.

The control unit 300 can also stop the supply of the drive signals MC+ and MC- to the DC motor 30. Accordingly, the rotation of the DC motor is stopped, and the gear pump 34 is stopped. For example, in a state in which the vehicle height of the motorcycle 1 is maintained, the gear pump 34 is stopped, and the flow of the hydraulic oil as the hydraulic fluid in the fluid pressure circuit is stopped.

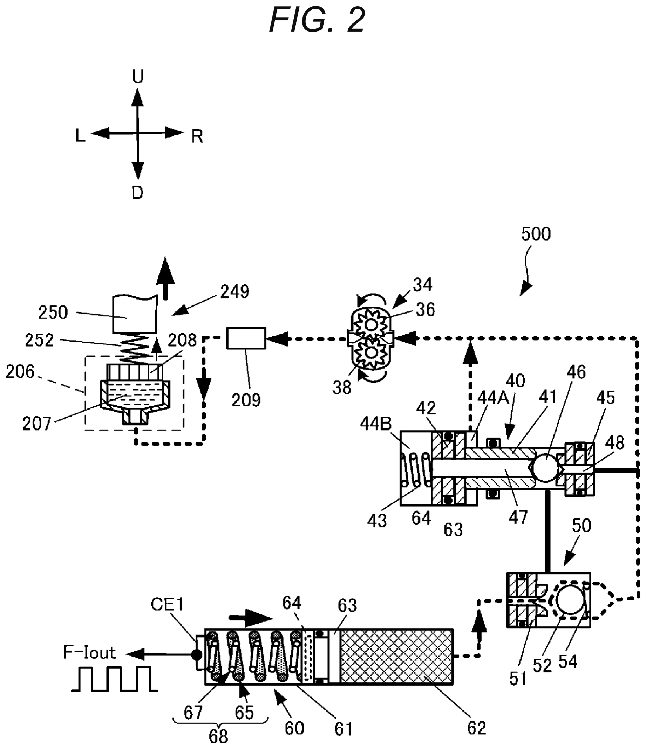

Next, FIG. 2 will be referred to. FIG. 2 is a diagram showing an example of a rotation direction of a pump and a flow of a fluid when the vehicle height is increased in the fluid pressure system shown in FIG. 1. In FIG. 2, the flow of the hydraulic fluid is indicated by a dashed arrow.

When the vehicle height of the motorcycle 1 is increased, the gear pump 34 rotates forward, that is, rotates in the forward direction. Specifically, the first gear 36 of the gear pump 34 rotates counterclockwise, and the second gear 38 rotates clockwise.

Accordingly, the hydraulic oil serving as the hydraulic fluid in the fluid pressure system 500 flows out from the storage chamber 62 of the reservoir 60, and flows to the jack chamber 207 of the jack 206 via the check valve 50, the gear pump 34, and the hydraulic coupler 209.

In the state in FIG. 2, in the reservoir 60, the piston 63 is biased by the coil spring 68 which is also a component of the position sensor SE, in other words, the coil spring 68 in which a double-spring structure is used and the spring constant is increased, and moves to the right side, and the hydraulic oil efficiently flows out from the storage chamber 62. Therefore, the movement of the hydraulic oil from the reservoir 60 to the jack 206 described above can be smoothly performed.

Accordingly, the amount of hydraulic oil in the jack chamber 207 of the jack 206 increases, and the plunger 28 is pressed upward by the hydraulic oil. Accordingly, the suspension spring 252 is compressed, and the damper tube 250 serving as a container of the shock absorber is raised. The upper end of the damper tube 250 is attached to the vehicle main body 15. The damper tube 250 is raised, so that the vehicle height of the motorcycle 1 is increased.

In the state in FIG. 2, the hydraulic oil does not flow into the first liquid chamber 44A of the hydraulic valve 40. The valve body 46 is prevented from moving by the plunger 41 and is in a closed state. In other words, the hydraulic valve 40 maintains the closed state.

Here, FIG. 4 is referred to. FIG. 4 is a diagram showing an example of the relationship between the vehicle speed and the vehicle height. The power of the motorcycle 1 is turned on at a time t0 in FIG. 4, and the motorcycle 1 stopped at a time t1 starts traveling. In a period T1 from the time t1 to a time t2, the vehicle speed increases to a speed V1, and accordingly, the vehicle height increases from the "low" position to the "high" position.

That is, the operation of increasing the vehicle height of the motorcycle 1 is performed within the predetermined period T1 from when the stopped motorcycle 1 starts traveling to when the vehicle speed reaches the predetermined traveling speed V1.

As described with reference to FIG. 2, in the present example, the vehicle height is gradually increased by driving the hydraulic oil by the gear pump 34, and the vehicle height can be increased to the predetermined "high" position within the predetermined period T1.

Since the operation described above is achieved by driving the hydraulic oil by the gear pump 34, it is not necessary to operate the hydraulic valve 40 in the example in FIG. 2. Therefore, in the example in FIG. 2, the hydraulic valve 40 is maintained in the closed state.

In FIG. 4, when the predetermined period T2 elapses, the motorcycle 1 travels at a constant speed. This state continues in the period T2 from the time t2 to a time t4. In the period T2, the vehicle height is maintained. Therefore, the gear pump 34 stops rotating. In the period T2, backflow of the hydraulic fluid to the reservoir 60 is prevented by the check valve 50, and erroneous detection executed by the sensor SE is prevented.

Next, FIG. 3 will be referred to. FIG. 3 is a diagram showing an example of the rotation direction of the pump and the flow of the fluid when the vehicle height is reduced in the fluid pressure system shown in FIG. 1.

When the vehicle height of the motorcycle 1 is decreased, the gear pump 34 rotates reversely, that is, in the reverse direction. Specifically, the first gear 36 of the gear pump 34 rotates clockwise, and the second gear 38 rotates counterclockwise.

Accordingly, the discharge direction of the hydraulic fluid of the gear pump 34 is opposite to that in the example in FIG. 2. A part of the hydraulic oil serving as the hydraulic fluid discharged from the gear pump 34 flows into the first liquid chamber 44A of the hydraulic valve 40.

Accordingly, the amount of hydraulic oil in the first liquid chamber 44A increases, and the hydraulic oil presses the plunger 41. Accordingly, the plunger 41 moves to the left, and accordingly, the valve body 46 also moves to the left and the flow path is opened. That is, the hydraulic valve 40 is in an open state.

On the other hand, the check valve 50 is in a closed state, and the movement of the hydraulic oil via the check valve is prohibited.

There are two paths through which the hydraulic oil flows.

One path is a first path through which the hydraulic oil flowing out of the jack chamber 207 of the jack 206 is discharged by the gear pump 34 and flows into the storage chamber 62 of the reservoir 60 via the hydraulic valve 40.

The other path is a second path through which the hydraulic oil flowing out of the jack chamber 207 of the jack 206 flows into the storage chamber 62 of the reservoir 60 via the hydraulic coupler 209 and the hydraulic valve 40, in other words, without passing through the gear pump 34.

In other words, the hydraulic oil flowing out of the jack chamber 207, which is pressed by the plunger 208 biased by the suspension spring 252 and has a high pressure, flows to the storage chamber 62 of the low pressure reservoir 60 via the second path.

Since the hydraulic oil flowing through the second path is added to the hydraulic oil flowing through the first path, the amount of moving hydraulic oil increases, and thus the vehicle height of the motorcycle 1 can be quickly decreased to the predetermined "low" position.

In this way, the vehicle height of the motorcycle 1 rapidly decreases, and when the motorcycle 1 is in a stopped state, the decrease of the vehicle height is completed. Therefore, good foot placement performance is ensured.

Here, FIG. 4 is referred to again. At a time t3 in FIG. 4, the vehicle speed starts to decrease. In a period T3 from the time t4 to a time t5, the vehicle height decreases.

The period T3 which is the vehicle height decreasing period is considerably shorter than the period T2 which is the vehicle height increasing period. In other words, the operation of decreasing the vehicle height of the motorcycle 1 is performed in order to improve the foot placement performance of the rider, for example, immediately before the traveling motorcycle 1 is sufficiently decelerated and stopped. That is, it is required to reduce the vehicle height in a short period of time to improve the foot placement performance.

In this case, the drive force may be insufficient only by driving the hydraulic oil by the gear pump 34.

Therefore, in the example in FIG. 3 described above, the hydraulic valve 40 serving as the fluid pressure valve is in an open state to move the hydraulic oil from the high pressure jack chamber 207 to the storage chamber 62 of the low pressure reservoir 60, thereby compensating for the shortage of the drive force described above.

In the example in FIG. 3, the electric type gear pump 34 and the mechanical hydraulic valve 40 cooperate with each other to constitute a pump portion 35 which is one drive source. This pump portion 35 is activated only when the electric type gear pump 34 rotates in a predetermined direction and the hydraulic oil moves from the jack 206 to the reservoir 60 in which the position sensor SE is provided.

In the fluid pressure system 500 shown in FIGS. 1 to 3 described above, the drive source of the hydraulic fluid is unified to the electric type pump 34 capable of switching the discharge direction of the hydraulic fluid, and a mechanical self-pump is not required as in the system in Patent Literature 2. Therefore, the configuration is simplified.

The movement direction of the hydraulic fluid can be switched at high speed only by driving the electric type pump 34 by the DC motor 30 or the like serving as a motor unit. The switching control of the hydraulic fluid is also facilitated. Therefore, the load on the control unit 300 can be reduced.

In the fluid pressure system 500 shown in FIGS. 1 to 3, the position sensor SE provided in the vicinity of the jack 206 for vehicle height adjustment in the related art can be provided in the reservoir 60 provided on the side opposite to the jack 206 via the fluid pressure circuit.

For example, a fluid pressure system can be constructed by replacing a reservoir using an air chamber with a reservoir using the spring according to the present invention.

Therefore, the configuration of the jack 206 can be simplified. The degree of freedom in designing the fluid pressure system 500 can be improved.

The position sensor SE is configured using the normal coil spring 68 having a mechanical role of pressing the piston 63 serving as a movable member as an electronic component through which a current flows. Therefore, the configuration of the position sensor is simplified, and since a high-precision coil which is an expensive electronic component is not used, the cost can be reduced.

In the fluid pressure system 500 shown in FIGS. 1 to 3, the hydraulic valve 40 is used, and the solenoid valve is not used. The solenoid valve uses a coil which is an expensive electronic component, and an actuator for driving the solenoid valve is also required. In contrast, the fluid pressure system 500 according to the present example does not use a solenoid valve. This contributes to cost reduction and facilitation of control of the fluid pressure system 500.

In this way, according to the present example, it is possible to implement a fluid pressure system, for example, a hydraulic system, in which the configuration is simplified, no expensive electronic components are used, and the fluid can be driven only by the forward rotation and the reverse rotation of the electric type pump.

According to the present example, for example, a fluid pressure system that is suitable for an electric type motorcycle operated by a battery is implemented.

<Example 2>

Next, a configuration example of the position sensor SE will be described. Reference is made to FIG. 5. FIG. 5 is a diagram showing an example of an equivalent circuit diagram of the position sensor, an example of the structure of a coil spring that is a component of the position sensor, and an example of arrangement of a control board. In FIG. 5, the same portions as those in FIG. 1 are denoted by the same reference signs.

A-1 and A-2 of FIG. 5 show sensor circuit configuration examples. In A-3 of FIG. 5, in order to facilitate understanding, the coil spring having a double structure is shown in an exploded manner as two coil springs, and an example of a winding direction of each coil spring and a direction of a generated magnetic field is shown.

In the example of A-1 of FIG. 5, the spring provided in the reservoir 60 previously shown in FIGS. 1 to 3, in other words, the coil spring 68 whose surface is covered with, for example, an electrical insulating material and that can be compressed to a state in which the windings are in close contact with each other is used as a component of the LC resonance circuit.

In the example of A-1 of FIG. 5, a circuit board 101 is mounted on the control board 64. On the circuit board 101, an AC signal source 103 that generates, for example, a sine wave and a capacitance 105 that is a component of a resonance circuit are provided.

The coil spring 68 is a member having both a function as a mechanical biasing member and a function as a coil having a variable inductance as a component of the resonance circuit.

Here, how the inductance of the coil spring 68 changes due to the compression and the expansion of the coil spring 68 will be described.

Here, when the radius of the coil spring 68 is "a", the length along the compression and expansion direction is "b", the number of turns of the winding 68 is "n", the magnetic permeability of a vacuum is "$\mu0$", and the Nagaoka coefficient is "k", an inductance L can be expressed by the following Equation 1.

$$L = k \cdot \mu0 \cdot \pi \cdot a^2 \cdot n^2/b \cdot \ldots \text{ Equation } 1$$

As shown in A-3 of FIG. 5, the two coil springs 65 and 67 constituting the coil spring 68 are arranged in parallel, and are displaced by the same amount when a load is applied. That is, the inductance L changes as the length "b" of each of the coil springs 65 and 67 along the compression and expansion direction changes.

Therefore, the displacement amount can be measured by detecting the change amount of the inductance L based on the electrical signal.

In A-1 of FIG. 5, when the inductance changes according to the compression and the expansion of the coil spring 68, the resonance frequency of the LC resonance circuit changes accordingly. Therefore, as indicated by A-3 in FIG. 1, the position sensor SE outputs the current signal F-Iout whose frequency fluctuates according to the displacement TD.

Since the displacement amount TD of the length "b" of the coil spring 68 along the compression and expansion direction, in other words, the displacement amount TD of the piston 63 serving as the movable member and a frequency F of the current signal F-Iout have a correspondence relationship of 1:1, the displacement amount TD can be detected by measuring the frequency F of the current signal F-Iout.

As described above with reference to FIG. 1, the control unit 300 converts the frequency of the current signal F-Iout into a voltage signal by the incorporated F/V converter 302, measures the frequency of the current signal F-Iout based on the voltage signal obtained by the conversion, detects the displacement amount based on the measured frequency, and detects the vehicle height of the motorcycle 1 based on the information on the displacement amount.

Next, A-2 of FIG. 5 will be referred to. In the example in A-2 of FIG. 5, the inductance of the coil spring 68 is more directly detected by a method called a VI method.

In the example in A-2 of FIG. 5, the circuit board 101 is mounted on the control board 64, and the AC signal source 103 and a resistor 106 are provided on the circuit board 101. The resistor 106 and the coil spring 68 constitute an RL series circuit.

An AC signal such as a sine wave is applied to the RL series circuit by the AC signal source 103. Here, when the inductance changes due to the compression and the expansion of the coil spring 68, the current amount of the current signal Iout serving as the detection output changes. Therefore, the displacement amount TD can be detected by measuring the current signal Iout.

When a change in inductance is detected by the VI method using the circuit in A-2 of FIG. 5, the F/V converter 302 incorporated in the control unit 300 is replaced with an I/V converter.

The circuits in A-1 and A-2 of FIG. 5 are examples, and the present invention is not limited thereto. As the position sensor, for example, a circuit that measures a change in inductance based on the power may be used.

Next, A-3 of FIG. 5 will be referred to. As described above with reference to FIG. 1, the coil spring 68 provided in the reservoir 60 has a double-spring structure including the first coil spring 65 that has a large diameter and that is provided on the outer side and the second coil spring 67 that has a small diameter and that is provided concentrically inside the first coil spring 65.

Regarding the mechanical arrangement, the first coil spring 65 and the second coil spring 67 are arranged in parallel. When the spring constants of the first coil spring 65 and the second coil spring 67 are K1 and K2, the spring constant of the double coil springs 68 is K1 + K2.

Therefore, by using the double coil springs 68, a compression coil spring having a large spring constant can be obtained. In other words, by using the double coil springs 68, the piston 63 serving as the movable member can be biased by a larger biasing force.

On the other hand, regarding the electrical connection, the end portions of the first coil spring 65 and the second coil spring 67 on the side opposite to the piston 63 are electrically connected to each other by the conductor CE1 for electrical connection formed of an electrode or the like. Therefore, the coil spring 68 having a double structure constitutes one electrical signal path as a whole.

Further, the end portions of the first and second coil springs 65 and 67 located near the piston 63 are electrically connected to the control board 64. The position sensor SE is configured by electrically connecting the members in this manner.

The first coil spring 65 and the second coil spring 67 are electrically connected in series, and the length of the coil spring in the compression and expansion direction is substantially doubled. That is, the length of the coil spring is substantially doubled. Therefore, for example, when a predetermined displacement occurs in one coil spring, substantially twice the displacement occurs, and thus the detection accuracy of the position sensor is improved.

In the stroke sensor in the related art in which a metal and a coil are fitted and the displacement is detected by a change in fitting length, there is a restriction that the detection sensitivity cannot be ensured unless the fitting length is increased to a certain extent.

On the other hand, the surfaces of the first coil spring 65 and the second coil spring 67 used in the present invention are covered with, for example, an electrically insulating material, so that the coil length can be reduced until the winding is brought into close contact, in other words, until the close contact length is reached. Therefore, the coil spring can be miniaturized.

The coil spring 68 having the double structure can be basically constituted by two coil springs 65 and 67 and a washer, and the number of components can be significantly reduced as compared with the structure in the related art. In other words, according to the position sensor SE in the present invention, simplification of the configuration is achieved, and cost reduction is also achieved.

As shown in A-3 of FIG. 5, the winding directions of the windings of the first coil spring 65 and the second coil spring 67, that is, the winding directions of the coil springs are opposite to each other, whereas the directions of the currents flowing through the first coil spring 65 and the second coil spring 67 are opposite to each other. In A-3 of FIG. 5, the currents flowing through the coil springs 65 and 67 are indicated by dashed arrows.

As a result, the directions of magnetic fields B1 and B2 generated in the first coil spring 65 and the second coil spring 67 along the movement direction of the piston 63 serving as the movable member, in other words, the directions of the magnetic force lines B1 and B2 are the same. In A-3 of FIG. 5, the direction of the magnetic field, that is, the magnetic flux line is indicated by a dashed arrow. That is, the directions of the magnetic fields B1 and B2 are from the right toward the left.

In this way, according to the configuration in A-3 of FIG. 5, since the magnetic fields generated by the first coil spring 65 and the second coil spring 67 do not cancel each other, the detection sensitivity of the position sensor SE is prevented from being lowered.

In A-3 of FIG. 5, the control board 64 is provided in the housing 61 in the reservoir 60 in which the piston 63 serving as the movable member and the coil spring 68 are accommodated. For example, the control board 64 can be incorporated in the piston 63 serving as a movable member, or can be mounted on the surface of the piston 63.

Therefore, the wiring is not necessary or the wiring is shortened, so that the electrical connection structure is simplified. The layout property is good, and miniaturization of the position sensor is achieved.

One end portions of the first coil 65 and the second coil 67 can be connected to each other at the shortest distance using the conductor CE1 for electrical connection such as an electrode provided in the housing 61, and wiring is not required. In this respect as well, miniaturization of the position sensor SE is achieved.

The sensor output F-Iout or Iout is output from the conductor CE1 for electrical connection. Therefore, the conductor CE1 for electrical connection also serves as a sensor output terminal.

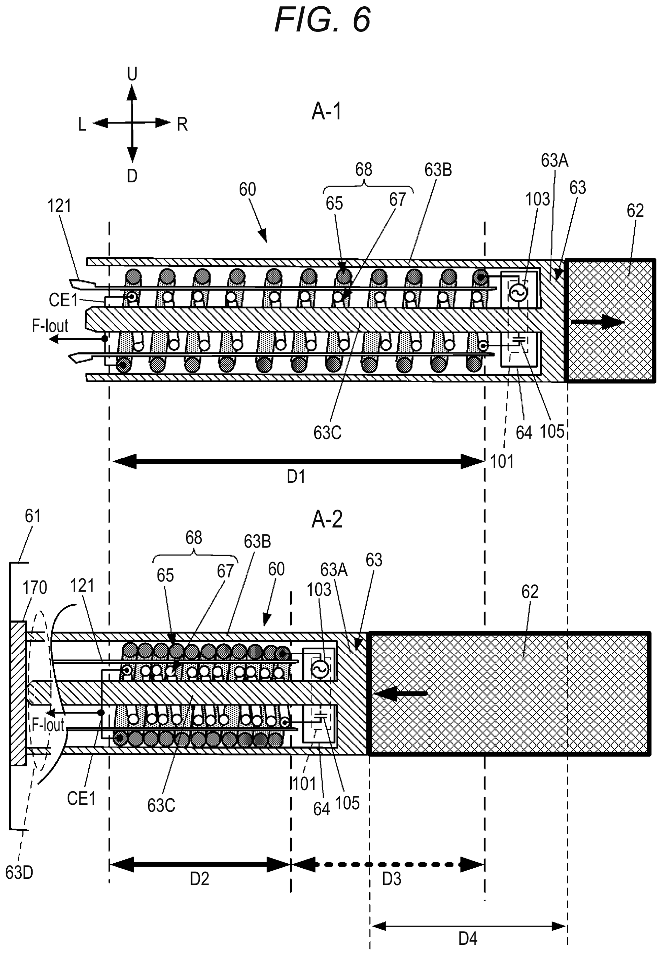

Next, FIG. 6 will be referred to. FIG. 6 is a diagram showing the position sensor in a state in which the coil spring is extended and the position sensor in a state in which the coil spring is compressed to the close contact length. In FIG. 6, the circuit shown in A-1 of FIG. 5 is used as the circuit of the position sensor. In FIG. 6, the same portions as those in the drawings described above are denoted by the same reference signs.

As shown in A-1 of FIG. 6, the length of the coil spring 68 in the compression and expansion direction or the length of the movable member 63 in the movable direction is D1. As shown in A-2 of FIG. 6, in a state in which the coil spring 68 is most compressed within the allowed range, the windings are in close contact with each other. The length of the winding in the close contact state is referred to as a close contact length.

The close contact length is D2. The difference between the length D1 when the coil spring 68 is extended and the close contact length D2 is a length D3 corresponding to the maximum displacement amount.

The movable distance of the movable member 63, in other words, the maximum stroke length is D4. The maximum stroke length D4 is equal to the length D3 corresponding to the maximum displacement amount of the coil spring described above.

As shown in A-1 and A-2 of FIG. 6, the piston 63 serving as the movable member has a main body portion 63A of the movable member that is a portion pressed by the fluid in the storage chamber 62, an outer wall portion 63B that surrounds the double coil springs 68, and an insertion portion 63C inserted into an inside of the double coil springs 68.

When the amount of fluid increases due to the fluid flowing into the storage chamber 62, the piston 63 serving as a movable member is pressed by the fluid and moves in the left direction, which is the first direction, and is biased by the coil spring 68 to press the fluid. When the amount of the fluid decreases due to the fluid flowing out of the storage chamber 62, the piston 63 moves in the second direction, which is opposite to the first direction, that is, in the right direction.

A portion surrounded by a dashed ellipse on the left side of A-2 of FIG. 6 constitutes the outer wall portion 63B and a distal end portion 63D of the insertion portion 63C.

At least the insertion portion 63C of the piston 63 serving as the movable member is preferably made of a non-magnetic metal.

Here, the non-magnetic body is a substance that is not a ferromagnetic body. Specifically, the non-magnetic body is a general term for a diamagnetic body, a paramagnetic body, and an anti-ferromagnetic body.

Since the piston 63 serving as the movable member is pressed by the fluid and is biased by the coil spring 68, a mechanically stable characteristic is required. Metal is advantageous from the viewpoint of mechanical stability because at least a certain degree of rigidity and strength can be expected.

The non-magnetic body is used to facilitate detection of a change in inductance due to the compression and the expansion of the coil spring.

If a ferromagnetic body such as ferrite, in other words, a magnetic body is used as the insertion portion 63C of the movable member 63, for example, the insertion portion 63C is magnetized by a magnetic field generated in the coil spring 68 to become a strong magnet, and the insertion portion 63C itself generates a strong magnetic field.

In this case, even if the coil spring 68 is compressed or expanded to change the inductance and the magnetic field is changed, the change is buried in the magnetic field generated by the insertion portion 63C and is difficult to detect. Therefore, in the present example, a ferromagnetic body (in other words, a magnetic body in a narrow sense) is not used as the material of the insertion portion 63C.

As the material of the insertion portion 63C, for example, a paramagnetic metal can be used. The paramagnetic body is a material that is not magnetized when there is no external magnetic field and is weakly magnetized in the direction of the magnetic field when the magnetic field is applied. Since the magnetization is weak, the magnetic field generated from the coil spring 68 can be appropriately strengthened without reducing the detection sensitivity of the position sensor. This contributes to improvement of the detection sensitivity of the position sensor.

Examples of the paramagnetic metal include aluminum, molybdenum, and titanium. In the present example, a material containing aluminum as a main component is used. The material containing aluminum as a main component includes pure aluminum and an aluminum alloy containing another metal.

Aluminum is a metal material exhibiting paramagnetism at room temperature, and has a large number of advantages such as being easy to process, having excellent corrosion resistance, being relatively inexpensive, being easily available, being lightweight, and being easy to handle.

It is preferable that the entire movable member 63 including the insertion portion 63C is made of a non-magnetic metal, for example, a paramagnetic metal, but the present invention is not limited thereto. At least the insertion portion 63C is made of a non-magnetic metal, in other words, a paramagnetic metal, so that the necessary detection sensitivity of the sensor SE can be achieved.

The rod-shaped insertion portion, in other words, the insertion portion 63C which is a rod-shaped member also has a function of reducing mechanical deformation of the first coil 65 and the second coil 67.

The rod-shaped insertion portion 63C also has a function of preventing the coil spring 68 or the movable member 63 itself from being broken or damaged. Accordingly, the mechanical strength of the position sensor can be improved.

For example, as shown in A-2 of FIG. 6, in a case where the coil spring 68 is pressed by the movable member 63 and comes to a state of being most compressed within the allowed range, the distal end portion 63D of the movable member 63 including the distal end of the rod-shaped insertion portion 63C abuts against the housing 61 of the reservoir 60 or a structure 170 fixed in the housing 61, thereby preventing the movable member 63 from moving.

In other words, the rod-shaped insertion portion 63C functions as a stopper that prevents the movable member 63 from moving. Accordingly, it is possible to reliably prevent an excessive load from being applied to the coil spring 68. The rod-shaped insertion portion 63C abuts against the housing 61 or the structure 170, so that the mechanical stability is increased, and the movable member 63 itself is prevented from being broken or damaged.

In the present example, a partition member 121 for preventing the coils from entangling is provided between the first coil spring 65 and the second coil spring 67. Accordingly, deformation, breakage, and the like due to entanglement of the coil springs are prevented.

<Example 3>

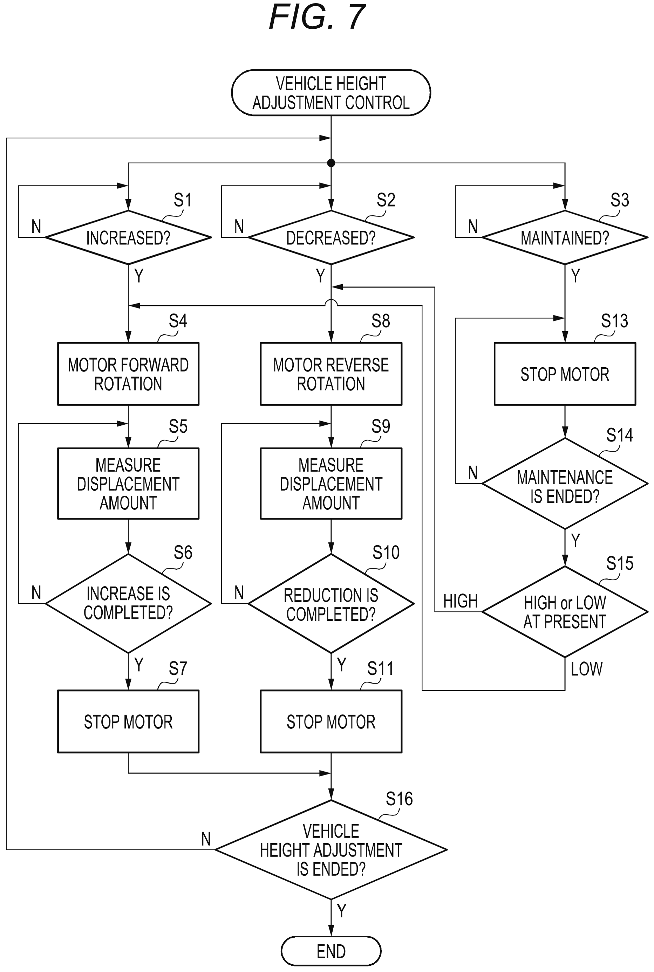

In the present example, an example of a control procedure of the control unit will be described. Reference is made to FIG. 7. FIG. 7 is a flowchart showing a procedure example of vehicle height adjustment control.

First, in step S1, the control unit 300 determines whether the current situation is a situation in which the vehicle height needs to be increased. In step S2, it is determined whether the vehicle height needs to be decreased. In step S3, it is determined whether the vehicle height needs to be maintained. Steps S1 to S3 may be executed in parallel.

If N in step S1, the determination in step S1 is continued, and if Y, the motor, for example, the DC motor is rotated forward in step S4.

Subsequently, in step S5, the displacement amount is measured based on the detection output of the sensor. As shown in FIG. 4, the forward rotation of the motor is continued until the vehicle height reaches the predetermined "high" position.

In step S6, it is determined whether the vehicle height increase is completed. If N in step S6, the process returns to step S5, and if Y, the motor is stopped in step S7. Subsequently, the process proceeds to step S16.

In step S16, it is determined whether to end the vehicle height adjustment. If Y in step S16, the vehicle height adjustment control is ended, and if N, the process returns to step S1, step S2, or step S3.

If N in step S2, the determination in step S2 is continued, and if Y, the motor, for example, the DC motor is rotated reversely in step S8.

Subsequently, in step S9, the displacement amount is measured based on the detection output of the sensor. As shown in FIG. 4, the reverse rotation of the motor is continued until the vehicle height reaches the predetermined "low" position.

In step S10, it is determined whether the vehicle height reduction is completed. If N in step S10, the process returns to step S9, and if Y, the motor is stopped in step S11. Subsequently, the process proceeds to step S16.

In step S16, it is determined whether to end the vehicle height adjustment. If Y in step S16, the vehicle height adjustment control is ended, and if N, the process returns to step S1, step S2, or step S3.

If N in step S3, the determination in step S3 is continued, and if Y, the motor, for example, the DC motor is stopped in step S13.

Next, in step S14, it is determined whether the situation of maintaining the vehicle height is ended. If N in step S14, the process returns to step S13, if Y, the process proceeds to step S8 when the current vehicle height is at the "high" position, and the process proceeds to step S4 when the current vehicle height is at the "low" position.

In this way, according to the present example, the fluid in the fluid pressure circuit can be driven only by the forward rotation or the reverse rotation of the motor, and the configuration of the fluid pressure circuit can be simplified. The fluid pressure circuit can also be applied to, for example, an electric motorcycle that operates with a battery.

As described above, a first aspect of the present invention provides a position sensor SE including: a movable member 63 provided in a housing 61 and allowed to reciprocate by receiving a pressure from a fluid in the housing 61 or pressing the fluid; a coil spring 68 configured to bias the movable member 63; and a control board 64 configured to feed a current through the coil spring 68 to generate a magnetic field, in which an electrical signal F-Iout fluctuating according to a movement of the movable member 63 is output from the coil spring 68.

In the first aspect, the position sensor is provided in the housing accommodating the fluid. This position sensor has , as a component, a movable member capable of reciprocating by receiving a pressure from the fluid or pressing the fluid.

A coil spring serving as a mechanical biasing member that biases the movable member also serves as a component of an electrical position sensor, in other words, a coil having a variable inductance.

In other words, it is possible to implement a versatile position sensor using a coil spring that presses a movable member such as a piston by a reaction force generated by compression and that is commonly used in the mechanical field.

This position sensor can be easily provided at a location where the position sensor can be biased by a coil spring in the fluid pressure system. For example, when the position sensor according to the present aspect is provided in, for example, the reservoir in the fluid pressure system, the reservoir has not only a mechanical function of storing a fluid and causing the fluid to flow in and out but also a function as a sensor member that outputs information on displacement occurring in the movable member according to the movement of the fluid, that is, an electrical signal indicating the displacement.

When the position sensor according to the present aspect is used, the degree of freedom in designing the fluid pressure system can be improved. That is, in the related art, it is necessary to provide the position sensor in the vicinity of the target of which the displacement is to be measured. However, by using the position sensor according to the present aspect, it is possible to appropriately provide the position sensor at a location where the fluid needs to be biased in the fluid pressure system.

Accordingly, for example, simplification and miniaturization of the configuration in the vicinity of the target of which the displacement is to be measured are achieved.

Since the mechanical biasing mechanism and the electrical sensor mechanism can be mounted in the same housing, it is possible to attain various effects such as simplification of the device configuration, miniaturization of the device, or facilitation of electrical connection by, for example, reduction of wiring.

A second aspect is directed to the first aspect of the present invention, in which the movable member 63 may have an insertion portion 63C configured to be inserted into an inside of the coil spring 68, and at least the insertion portion 63C may be made of a non-magnetic metal.

In the second aspect, the movable member has the insertion portion, and the insertion portion is inserted into the coil spring, so that the coil spring is a cored coil spring.

The insertion portion preferably has both preferable characteristics from the mechanical viewpoint and preferable characteristics from the electromagnetic viewpoint.

At least the insertion portion of the movable member is made of metal, so that a certain degree of rigidity and strength can be expected, and thus the mechanical stability is ensured.

On the other hand, since the insertion portion is a non-magnetic body, for example, when a paramagnetic body is used, a magnetic field generated by magnetization is weak, and thus it is not difficult to detect a change in inductance of the coil spring due to compression and expansion.

Specifically, as the material of the insertion portion, for example, a paramagnetic metal such as aluminum may be used. The paramagnetic body is weakly magnetized when a magnetic field is applied. Since the magnetization is weak, the magnetic field generated from the coil spring can be appropriately strengthened without reducing the detection sensitivity of the position sensor. This contributes to improvement of the detection sensitivity of the position sensor.

The insertion portion can have a rod shape. In other words, the insertion portion serving as the rod-shaped member also has a function of reducing mechanical deformation of the coil spring. The rod-shaped insertion portion also has a function of preventing the coil spring or the movable member itself from being broken or damaged. Therefore, the mechanical strength of the position sensor is improved.

A third aspect is directed to the second aspect of the present invention, in which the non-magnetic metal may be a metal material containing aluminum as a main component.

In the third aspect, the metal material containing aluminum as a main component is used as the non-magnetic metal. Specifically, pure aluminum or an aluminum alloy may be used.

Aluminum is a metal material exhibiting paramagnetism at room temperature, and has advantages such as being easy to process, having excellent corrosion resistance, being relatively inexpensive, being easily available, being lightweight, and being easy to handle.

A fourth aspect is directed to the second or third aspect of the present invention, in which, in a case where the coil spring 68 is pressed by the movable member 63 and comes to a state of being most compressed within an allowed range, a distal end of the insertion portion in a rod-shape may abut against the housing or a structure fixed in the housing, and the rod-shaped insertion portion may function as a stopper that prevents a movement of the movable member.

In the fourth aspect, the rod-shaped insertion portion also functions as a stopper that prevents the movement of the movable member.

For example, it is assumed that the coil spring is pressed by the movable member and comes to the state of being most compressed within an allowed range. In this case, the distal end of the rod-shaped insertion portion abuts against the housing or a structure fixed in the housing, and the movement of the movable member is prevented. Therefore, an excessive load is reliably prevented from being applied to the coil spring.

The rod-shaped insertion portion abuts against the housing or the structure, so that the mechanical stability is increased, and the movable member itself is prevented from being broken or damaged.

A fifth aspect is directed to any one of the first to fourth aspects, in which the coil spring 68 may be double springs including a first coil spring 65 and a second coil spring 67 concentrically provided inside the first coil spring 65, and one end portion of the first coil spring 65 and one end portion of the second coil spring 67 may be electrically connected to each other, and a path of an electrical signal may be configured by the first coil spring 65 and the second coil spring 67.

In the fifth aspect, double coil springs including a first coil spring having a large diameter and a second coil spring having a small diameter is used as the coil spring.

Regarding the mechanical arrangement, the first and second coil springs are arranged in parallel, and when the spring constants of the first and second coil springs are K1 and K2, the spring constant of the double coil springs is K1 + K2. Therefore, a compression coil spring having a large spring constant can be obtained. Therefore, a movable member such as a piston can be biased by a larger biasing force.

On the other hand, regarding the electrical connection, the end portions of the first and second coil springs on the side opposite to the movable member are electrically connected to each other by a conductor for electrical connection formed of an electrode or the like, so that one path of the electrical signal can be formed.

Since the first and second coil springs are electrically connected in series and the length of the coil spring in the compression and expansion direction is increased, the detection accuracy of the position sensor is improved.

The surfaces of the first and second coil springs are covered with, for example, an electrically insulating material, so that the coil length can be reduced until the winding is brought into close contact, in other words, until the close contact length is reached. Therefore, the total length of the sensor can be reduced, and the sensor can be miniaturized.

In the stroke sensor using the fitting of the coil and the metal rod with high accuracy in the related art, a desired detection sensitivity of the sensor cannot be attained unless the fitting length is large to a certain extent. However, in the position sensor according to the present aspect, there is no restriction due to the fitting length, and a versatile position sensor with good usability is implemented.

The coil spring having the double structure can be basically constituted by two ordinary coil springs and a washer, and the number of components can be significantly reduced as compared with the structure in the related art. In other words, according to the position sensor in the present invention, simplification of the configuration can be achieved, and cost reduction can also be achieved.

A sixth aspect is directed to the fifth aspect, in which winding directions of the first coil spring 65 and the second coil spring 67 may be opposite to each other, directions of currents of the first coil spring 65 and the second coil spring 67 may be opposite to each other, and accordingly, directions of magnetic fields generated in the first coil spring 65 and the second coil spring 67 along a movement direction of the movable member 63 may be identical to each other.

According to the sixth aspect, since the magnetic fields generated by the first and second coil springs do not cancel each other, the detection sensitivity of the position sensor is prevented from being lowered.

A seventh aspect is directed to any one of the first to sixth aspects, in which a partition member 121 may be provided between the first coil spring 65 and the second coil spring 67.

According to the seventh aspect, deformation, breakage, and the like due to entanglement of the first and second coil springs are prevented.

An eighth aspect according to any one of the first to seventh aspects, in which the control board 64 may be provided in the housing in which the movable member 63 and the coil spring 68 are accommodated.

In the eighth aspect, the control board is provided in the common housing. For example, the control board 4 can be incorporated in the movable member, or can be mounted on the surface of the movable member.

According to the present aspect, the wiring is not necessary or the wiring is shortened, so that the electrical connection structure is simplified. The layout property is good, and miniaturization of the position sensor is achieved.

One end portions of the first and second coils can be connected to each other at the shortest distance using the conductor for electrical connection such as an electrode provided in the housing, and wiring is not required. In this respect as well, miniaturization of the position sensor is achieved.

A ninth aspect is directed to any one of the first to eighth aspects, in which the movable member 63 may be a piston that: is provided in a reservoir 60 including a storage chamber 62 which stores a fluid; moves in a first direction by being pressed due to the fluid, when an amount of the fluid increases due to the fluid flowing into the storage chamber 62; and presses the fluid by being biased due to the coil spring 68, and moves in a second direction opposite to the first direction, when the amount of the fluid decreases due to the fluid flowing out of the storage chamber 62.

In the ninth aspect, the movable member is a piston provided in the reservoir. In the present aspect, the position sensor can be constructed using a versatile spring for a normal piston. Therefore, a highly versatile position sensor is implemented.

A tenth aspect provides a fluid pressure system 500 having: a jack 206 including a jack chamber 207 into and from which a fluid flows; a reservoir 60 connected to the jack chamber 207 via a fluid pressure circuit through which the fluid flows, and including a storage chamber which stores a fluid; a pump 34 provided in the fluid pressure circuit, capable of forward rotation and reverse rotation, and allowing a discharge direction of the fluid to change by switching between the forward rotation and the reverse rotation; and a control unit 300 configured to switch between the forward rotation and the reverse rotation of the pump 34, in which the reservoir 60 includes the position sensor SE according to any one of the first to eighth aspects described above, the movable member 63 in the position sensor SE is a piston that moves in a first direction by being pressed by the fluid when an amount of the fluid increases due to the fluid flowing into the storage chamber 62, and that presses the fluid by being biased by the coil spring 68 and moves in a second direction opposite to the first direction when the amount of the fluid decreases due to the fluid flowing out of the storage chamber 62, and the control unit 300 switches between the forward rotation and the reverse rotation of the pump 34 based on an electrical signal output by the position sensor SE.

According to the tenth aspect, the configuration is simplified, the fluid can be driven only by the forward rotation and the reverse rotation of the electric type pump without using expensive electronic components, and a fluid pressure system suitable for, for example, electrifying a motorcycle can be implemented.

An eleventh aspect is directed to the tenth aspect, in which the fluid pressure system may further have: a fluid pressure valve 40 provided in the fluid pressure circuit, and coming to an open state by being driven due to the fluid discharged from the pump 34, only when the pump 34 operates in one of the forward rotation and the reverse rotation, to form a flow path through which a fluid moves from the jack 206 on a high pressure side to the reservoir 60 on a low pressure side; and a check valve 50 provided in the fluid pressure circuit, and coming to an open state, only when the pump 34 operates in an other one of the forward rotation and the reverse rotation, to form a flow path through which a fluid moves from the reservoir 60 to the jack 206.

According to the eleventh aspect, for example, when the drive force is insufficient only by driving the hydraulic fluid by the pump, the fluid pressure valve is in an open state, and the hydraulic fluid is moved from the jack chamber on the high pressure side to the storage chamber of the reservoir on the low pressure side using the pressure difference between the jack and the reservoir, so that the insufficient drive force described above can be compensated.

In the case of only driving by the pump, the check valve is opened, and the hydraulic fluid can flow from the storage chamber of the reservoir to the jack chamber through the flow path not passing through the fluid pressure valve. Since the check valve is in the closed state when the pump is stopped, the hydraulic fluid is prevented from erroneously flowing into the storage chamber of the reservoir.

A twelfth aspect is directed to the tenth or eleventh aspect, in which the fluid pressure system may further have a shock absorber 249 and a suspension spring 252, which are components of a vehicle suspension 22, in which the vehicle suspension 22 may be driven by driving the jack 206 to execute vehicle height adjustment of a vehicle 1, and accordingly, the fluid pressure system 500 may function as a vehicle height adjustment mechanism.

According to the twelfth aspect, by using the position sensor according to the present invention as a displacement sensor for vehicle height adjustment, it is possible to implement a vehicle height adjustment system that has a high degree of freedom in design, that enables to be simplified in configuration, that enables to be miniaturized in size, and that is capable of reducing in cost.

By using the eleventh aspect described above, in particular, the vehicle height can be quickly reduced. Therefore, when the vehicle is stopped, the rider can feel good foot placement performance.

In this way, according to the example of the present invention, it is possible to provide a position sensor that can be easily incorporated into a fluid pressure system, that is simplified in configuration, that can be miniaturized in size, that can be reduced in cost, and that is suitable for electrifying a motorcycle or the like.

According to the example of the present invention, it is possible to provide a fluid pressure system that is simplified in configuration, that is suitable for miniaturizing the system, that can be reduced in cost, and that is suitable for electrifying a motorcycle or the like.

In the above description, the motorcycle has been described as an example, but the present invention is also applicable to a three-wheeled vehicle, a four-wheeled vehicle, and the like, and is also applicable to an electric automobile, an electric bike, and the like that are currently being developed, and the type of the vehicle is not limited.

The present invention is not limited to the examples as long as the functions and effects of the invention are exhibited.

INDUSTRIAL APPLICABILITY

The present invention is suitable as the position sensor such as a stroke sensor that can be used for various applications, and the fluid pressure system such as a hydraulic system.

REFERENCE SIGNS LIST

    1 ... vehicle (motorcycle and the like)
    2 ... front wheel
    3 ... rear wheel
    11 ... vehicle body frame
    12 ... handle
    15 ... vehicle main body
    19 ... front fork
    22 ... rear suspension
    30 ... motor unit (motor, DC motor)
    32 ... motor shaft seal
    34 ... pump (gear pump, drive source)
    36 ... first pump
    38 ... second pump
    40 ... hydraulic valve (switching valve, direction switching valve)
    41 ... plunger
    42 ... piston
    43 ... spring
    44A ... first liquid chamber
    44B ... second liquid chamber
    45 ... valve seat
    46 ... valve body
    47, 48 ... flow path
    50 ... check valve
    51 ... valve seat
    52 ... valve body
    54 ... spring
    60 ... reservoir
    62 ... storage chamber
    63 ... movable member (piston)
    63A ... main body portion of movable member
    63B ... outer wall portion of movable member
    63C ... insertion portion of movable member
    63D ... outer wall portion and distal end portion of insertion portion (distal end portion of insertion portion, distal end of insertion portion, distal end portion including distal end of insertion portion in a rod-shape)

64 ... control board

65 ... first coil spring (first spring)

67 ... second coil spring (second spring)

68 ... coil spring (spring, double springs, double coil springs, compression coil spring, biasing member)

101 ... circuit board

103 ... AC signal source (sine wave generation circuit)

105 ... capacitance (capacitance constituting resonance circuit)

106 ... resistor (resistor constituting RL series circuit)

170 ... structure

206 ... jack

207 ... jack chamber

208 ... plunger

209 ... hydraulic coupler

249 ... shock absorber (damper)

250 ... damper tube

253, 254 ... oil chamber

256 ... rod

258 ... piston of shock absorber

259 ... orifice

260 ... reservoir tank

300 ... control unit (switching control unit)

302 ... F/V converter (frequency/voltage converter)

400 ... motor drive signal generation circuit

500 ... fluid pressure system

SE ... position sensor (sensor, stroke sensor, displacement sensor, detection unit)

RD ... current bias resistor

T1, T2 ... terminal (output terminal of position sensor, detection output terminal)

F-Iout ... electrical signal (sensor signal, sensor output, detection signal, detection output, position signal, current signal, current signal with fluctuating frequency)

Iout ... electrical signal (sensor signal, sensor output, detection signal, detection output, position signal, current signal)

## Claims

1. A position sensor comprising:

   a movable member provided in a housing and allowed to reciprocate by receiving a pressure from a fluid in the housing or pressing the fluid;
   a coil spring configured to bias the movable member; and
   a control board configured to feed a current through the coil spring to generate a magnetic field,
   wherein an electrical signal fluctuating according to a movement of the movable member is output from the coil spring.

2. The position sensor according to claim 1,

   wherein the movable member has an insertion portion configured to be inserted into an inside of the coil spring, and
   at least the insertion portion is made of a non-magnetic metal.

3. The position sensor according to claim 2,
   wherein the non-magnetic metal is a metal material containing aluminum as a main component.

4. The position sensor according to claim 2,
   wherein, in a case where the coil spring is pressed by the movable member and comes to a state of being most compressed within an allowed range, a distal end of the insertion portion in a rod-shape abuts against the housing or a structure fixed in the housing, and the rod-shaped insertion portion functions as a stopper that prevents a movement of the movable member.

5. The position sensor according to claim 1,

   wherein the coil spring is double springs including a first coil spring and a second coil spring concentrically provided inside the first coil spring, and
   one end portion of the first coil spring and one end portion of the second coil spring are electrically connected to each other, and a path of an electrical signal is configured by the first coil spring and the second coil spring.

6. The position sensor according to claim 5,

   wherein winding directions of the first coil spring and the second coil spring are opposite to each other,
   directions of currents of the first coil spring and the second coil spring are opposite to each other, and
   accordingly, directions of magnetic fields generated in the first coil spring and the second coil spring along a movement direction of the movable member are identical to each other.

7. The position sensor according to claim 5,
   wherein a partition member is provided between the first coil spring and the second coil spring.

8. The position sensor according to claim 1,
   wherein the control board is provided in the housing in which the movable member and the coil spring are accommodated.

9. The position sensor according to claim 1, wherein the movable member is a piston that:

is provided in a reservoir including a storage chamber which stores a fluid;

moves in a first direction by being pressed due to the fluid, when an amount of the fluid increases due to the fluid flowing into the storage chamber; and

presses the fluid by being biased due to the coil spring, and moves in a second direction opposite to the first direction, when the amount of the fluid decreases due to the fluid flowing out of the storage chamber.

10. A fluid pressure system comprising:

a jack including a jack chamber into and from which a fluid flows;

a reservoir connected to the jack chamber via a fluid pressure circuit through which the fluid flows, and including a storage chamber which stores a fluid;

a pump provided in the fluid pressure circuit, capable of forward rotation and reverse rotation, and allowing a discharge direction of the fluid to change by switching between the forward rotation and the reverse rotation; and

a control unit configured to switch between the forward rotation and the reverse rotation of the pump,

wherein the reservoir includes the position sensor according to any one of claims 1 to 8,

the movable member in the position sensor is a piston that moves in a first direction by being pressed by the fluid when an amount of the fluid increases due to the fluid flowing into the storage chamber, and that presses the fluid by being biased by the coil spring and moves in a second direction opposite to the first direction when the amount of the fluid decreases due to the fluid flowing out of the storage chamber, and

the control unit switches between the forward rotation and the reverse rotation of the pump based on an electrical signal output by the position sensor.

11. The fluid pressure system according to claim 10, further comprising:

a fluid pressure valve provided in the fluid pressure circuit, and coming to an open state by being driven due to the fluid discharged from the pump, only when the pump operates in one of the forward rotation and the reverse rotation, to form a flow path through which a fluid moves from the jack on a high pressure side to the reservoir on a low pressure side; and

a check valve provided in the fluid pressure circuit, and coming to an open state, only when the pump operates in an other one of the forward rotation and the reverse rotation, to form a flow path through which a fluid moves from the reservoir to the jack without passing through the fluid pressure valve.

12. The fluid pressure system according to claim 10, further comprising

a shock absorber and a suspension spring, which are components of a vehicle suspension, wherein the vehicle suspension is driven by driving the jack to execute vehicle height adjustment of a vehicle, and

accordingly, the fluid pressure system functions as a vehicle height adjustment mechanism.

# FIG. 1

# FIG. 2

# FIG. 3

# FIG. 4

# FIG. 5

# FIG. 6

# FIG. 7

## INTERNATIONAL SEARCH REPORT

International application No.

**PCT/JP2023/000003**

| A. | CLASSIFICATION OF SUBJECT MATTER |
|---|---|

*G01B 7/00*(2006.01)i; *G01D 5/20*(2006.01)i
FI:   G01B7/00 101Z; G01D5/20 J

According to International Patent Classification (IPC) or to both national classification and IPC

| B. | FIELDS SEARCHED |
|---|---|

Minimum documentation searched (classification system followed by classification symbols)

G01B7/00; G01D5/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2006-161852 A (SMC CORPORATION) 22 June 2006 (2006-06-22)<br>  paragraphs [0001]-[0027], fig. 1-10 | 1-3, 5-12 |
| A |  | 4 |
| Y | JP 6-72118 A (ROBERT BOSCH GMBH) 15 March 1994 (1994-03-15)<br>  paragraphs [0001]-[0017], fig. 1 | 1-3, 5-12 |
| A |  | 4 |
| Y | JP 3499844 B2 (MAYEKAWA MFG CO., LTD.) 23 February 2004 (2004-02-23)<br>  paragraphs [0001]-[0029], fig. 1-8 | 1-3, 5-12 |
| A |  | 4 |
| A | JP 7-139572 A (YAMAHA HATSUDOKI KABUSHIKI KAISHA) 30 May 1995<br>(1995-05-30)<br>  paragraphs [0001]-[0061], fig. 1-7 | 1-12 |
| A | JP 6873355 B1 (HITACHI ASTEMO, LTD.) 19 May 2021 (2021-05-19)<br>  paragraphs [0001]-[0083], fig. 1-13 | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/000003**

| Patent document cited in search report | | | Publication date (day/month/year) | Patent family member(s) | | | Publication date (day/month/year) |
|---|---|---|---|---|---|---|---|
| JP | 2006-161852 | A | 22 June 2006 | (Family: none) | | | |
| JP | 6-72118 | A | 15 March 1994 | DE | 4220801 | A1 | |
| | | | | FR | 2692979 | A1 | |
| JP | 3499844 | B2 | 23 February 2004 | JP | 2003-65704 | A | |
| JP | 7-139572 | A | 30 May 1995 | (Family: none) | | | |
| JP | 6873355 | B1 | 19 May 2021 | US | 2022/0203792 | A1 | |
| | | | | paragraphs [0001]-[0157], fig. 1-13 | | | |
| | | | | WO | 2021/260884 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3499844 B
- JP 6873355 B